# EUROPÄISCHE PATENTSCHRIFT

(11) **EP 4 025 367 B1**
(45) Veröffentlichungstag und Bekanntmachung des Hinweises auf die Patenterteilung: **08.11.2023**
(21) Anmeldenummer: 20775173.6
(22) Anmeldetag: 07.09.2020
(51) Int. Cl.: B23C 5/10

(54) **VERFAHREN ZUM WIEDERHERSTELLEN EINES KUGELBAHNFRÄSERS**
METHOD FOR RESTORING A BALL TRACK MILLING CUTTER
PROCÉDÉ DE RESTAURATION D'UNE FRAISE DE FINITION À BOUT HÉMISPHÉRIQUE

(30) Priorität: 06.09.2019 DE 102019123968
(43) Veröffentlichungstag der Anmeldung: 13.07.2022
(73) Patentinhaber: Gühring KG, 72458 Albstadt (DE)
(72) Erfinder: SANUK, Goekmen, 72458 Albstadt Ebingen (DE)
(74) Vertreter: Gleim, Christian Ragnar
(86) Internationale Anmeldenummer: PCT/DE2020/100780
(87) Internationale Veröffentlichungsnummer: WO 2021/043375

(56) Entgegenhaltungen:
- EP-A1- 0 502 543
- GB-A- 2 082 102
- JP-A- H10 138 030
- US-A1- 2010 129 165

## Beschreibung

Die Erfindung betrifft ein Verfahren gemäß dem Oberbegriff des Patentanspruchs 1, zum Wiederherstellen eines Kugelbahnfräsers.

Die Erfindung befasst sich mit Kugelbahnfräsern und liegt im technischen Gebiet von drehantreibbaren spanabhebenden Werkzeugen.

Derartige Kugelbahnfräser umfassen einen sich entlang einer Drehachse erstreckenden Trägerkörper (Halter) und einen beispielsweise am Trägerkörper ausgebildeten oder damit verbundenen Schneidkopf. Der Schneidkopf hat mindestens eine, häufig aber vier Schneideelemente mit Schneiden zur spanenden Bearbeitung von Werkstücken. Konventionelle Schneideelemente sind dazu in der Art von Kreisbogensegment-Schneiden ausgestaltet. Zum Beispiel in der auf die Anmelderin zurückgehende DE 10 2012 216 654 A1 ist so ein Kugelbahnfräser gezeigt.

Ferner ist aus dem Stand der Technik die JP H10 138 030 A, die den Oberbegriff des Anspruchs 1 offenbart, sowie die GB 2 082 102 A bekannt.

Der Trägerkörper ist üblicherweise aus Stahl oder Vollhartmetall. Die Schneideelemente sind vorzugsweise aus Hartstoff oder mit einer Hartstoffbeschichtung ausgebildet.

Bekannte Materialen dafür sind CBN (Kubisch kristallines Bornitrid) oder PKD (Polykristalliner Diamant). Die Schneideelemente können am Trägerkörper stoffschlüssig, z. B. durch Löten oder Kleben, befestigt sein. Es ist bekannt die zu mehreren am Trägerkörper befestigten Schneideelemente als Wechsel oder Wendeschneidplatten auszubilden.

Ein wesentliches Einsatzgebiet dieser Werkzeuge ist die Herstellung von homokinetischen Gelenken. Bei dieser Verwendung ist ganz besonders die Maßhaltung der eingesetzten Kugelbahnfräser wichtig, damit die erzeugte Oberflächengüte eine hinreichende Qualität bekommt. Ein Problem dabei ist, dass der bei der Bearbeitung der Kugelbahn auftretende Verschleiß dazu führt, dass die Maßhaltigkeit nur bei kurzen Standzeiten gewährleistet ist und die Schneidplatten gewechselt werden müssen. Bei verschlissenen Schneideelementen ist es bisher zwingend erforderlich, den Kugelbahnfräser komplett auszutauschen oder die abgenutzten Schneideelemente durch neue Schneideelemente zu ersetzen. Das Ersetzen der Schneideelemente durch neue Schneideelemente erfolgt zum Beispiel in dem die abgenutzten Schneideelemente ausgelötet werden und neue Schneideelemente in den Trägerkörper eingelötet werden. Hier ergibt sich das Problem mangelnder Wirtschaftlichkeit, da das Material zur Herstellung der Schneiden teuer ist.

Daher hat sich die Erfindung die Aufgabe gestellt, einen Kugelbahnfräser mit einem Trägerkörper zur Aufnahme von nachgeschliffenen Schneideelementen und ein Verfahren zum Wiederherstellen von Kugelbahnfräsern bereitzustellen, das die Nachteile im Stand der Technik überwindet und das insbesondere auf wirtschaftlich vorteilhafte Art und Weise einen Kugelbahnfräser mit nachgeschliffenen Schneiden bereitstellt.

Diese Aufgabe wird durch ein Verfahren zum Wiederherstellen eines Kugelbahnfräsers gemäß Anspruch 1 gelöst. Der Gegenstand der abhängigen Ansprüche betrifft vorteilhafte Ausgestaltungen.

Die Erfindung umfasst ein Verfahren zum Wiederherstellen eines Kugelbahnfräsers, umfassend die folgenden Schritte:
a) Bereitstellen eines Kugelbahnfräsers mit einem Trägerkörper und mindestens einem daran angeordneten Schneideelement (zum Beispiel ein Kugelbahnfräser wie hier beschrieben);
b) Trennen des mindestens einen Schneideelements vom Trägerkörper;
c) Schleifen des Schneideelements;
d) Bereitstellen eines neuen Trägerkörpers; und
e) Befestigen des nachgeschliffenen Schneideelements am neuen Trägerkörper.

Dabei wird im Schritt d) Bereitstellen eines neuen Trägerkörpers ein neuer Trägerkörper bereitgestellt, der eine im Vergleich zum Trägerkörper verschiedene Geometrie hat. Die Geometrie kann insgesamt oder in Teilen verschieden sein.

Der Austausch des Trägerkörpers erlaubt ein Wiederverwenden der Schneideelemente in nachgeschliffener Form.

Bevorzugt hat der neue Trägerkörper eine Ausnehmung mit einer Sitzfläche, an der das nachgeschliffene Schneideelement mit einer der Schneide gegenüberliegenden Anlagefläche zur Anlage gelangt, wobei die Sitzfläche einen geringeren maximalen Abstand d zu einer Außenfläche des Trägerkörpers im Vergleich zu dem Trägerkörper aus Schritt b) hat.

Ferner bevorzugt ist die Sitzfläche gerade ausgebildet ist und hat einen maximalen Abstand d zu einer Außenfläche des neuen Trägerkörpers im Bereich von mehr als 1 mm, insbesondere von mehr als 1,5 mm oder 1,7 mm.

Es ist zudem vorteilhaft, wenn der maximale Abstand d zu einer Außenfläche des Trägerkörpers im Bereich von 1,5 mm bis 3 mm, insbesondere im Bereich von 2,2 mm bis 2,8 mm ist.

Dabei ist es bevorzugt, wenn das Schneideelement mit einer nachgeschliffenen Schneide nach dem Schritt c) eine Höhe h im Bereich von 1,5 mm bis 3 mm, insbesondere im Bereich von 2,2 mm bis 2,8 mm hat.

Die Erfindung wird im Folgenden anhand des in den Zeichnungen dargestellten Beispiels zusätzlich erläutert.

Es zeigen:
- Fig. 1: eine perspektivische Darstellung des oberen Teils eines Kugelbahnfräsers gemäß einem Beispiel mit einem Trägerkörper zur Aufnahme von Schneideelementen;
- Fig. 2: eine seitliche Draufsicht des Trägerkörpers für den Kugelbahnfräser aus Fig. 1; und
- Fig. 3: ein Blockdiagramm für ein Verfahren zum Wiederherstellen eines Kugelbahnfräsers wie zum Beispiel in Fig. 1 gezeigt.

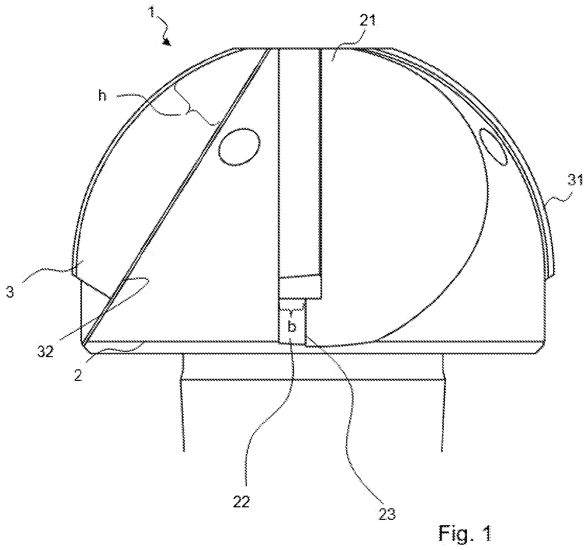

In **Fig. 1** ist eine perspektivische Darstellung des oberen Teils eines Kugelbahnfräsers 1 gezeigt, welcher in diesem Beispiel vier Schneideelemente 3 umfasst.

Der Kugelbahnfräser 1 hat einen Trägerkörper 2, bei dem ein Halter und ein oben daran anschließender Kopfabschnitt einstückig ausgeformt sind. Am Trägerkörper 2 sind vier Schneideelemente 3 unter einem gleichen Winkelabstand von 90° angeordnet. Jedes Schneideelement 3 hat an der Außenseite eine Schneide 31, die in der Form der Umrisslinie eines Kreissegmentbogenabschnitts geformt ist. Beim Nachschleifen wird dem Schneideelement 3 auf der Seite der Schneide 31 etwa 0,2 mm Material weggenommen.

Der Trägerkörper 2 hat vier Ausnehmungen 21 zur abschnittsweisen Aufnahme jeweils eines Schneideelements 3. Die Ausnehmung 21 ist in diesem Beispiel als Spanraum des Kugelbahnfräsers 1 ausgebildet.

Jede Ausnehmung 21 ist derart ausgebildet, ein nachgeschliffenes Schneideelement 3 mit einer nachgeschliffenen Form und Größe darin aufzunehmen, welchem an der Außenseite etwa 0,2 mm Material weggeschliffen wurde.

In diesem Beispiel ist die Ausnehmung mit einer derart erhöht ausgebildeten Sitzfläche 22 ausgestattet, dass das nachgeschliffene Schneideelement 3, welches auf der erhöhten Sitzfläche 22 angeordnet ist, mit der Schneide 31 oberhalb der Außenkontur des Trägerkörpers 2 verläuft, wie in der rechten Bildhälfte zu sehen.

An der Sitzfläche 22 liegt das Schneideelement 3 mit einer der Schneide 31 gegenüberliegenden Anlagefläche 32 an. Im gezeigten Beispiel hat die Ausnehmung 21 einen Absatz 23 auf dem die Sitzfläche 22 angeordnet ist. Der Absatz 23 hat eine Breite b, die kleiner ist als die Breite des Schneideelements 3, so dass das Schneideelement 3 seitlich über den Absatz 23 hinausragt.

Dabei ist die Sitzfläche 22 eben ausgebildet ist und hat einen maximalen Abstand d zu einer kugelsegmentförmigen Außenfläche des Trägerkörpers 2 im Bereich von mehr als 1 mm, bevorzugt von mehr als 1,5 oder 1,7 mm. Vorteilhafterweise kann der maximale Abstand d zu einer Außenfläche des Trägerkörpers 2 im Bereich von 1,5 mm bis 3 mm, insbesondere im Bereich von 2,2 bis 2,8 gewählt werden.

Indem der Trägerkörper 2 zur Aufnahme 21 von nachgeschliffenen Schneideelementen 3 bereitgestellt wird, lassen sich die Schneideelemente 3 nachschleifen und wiederverwenden und es muss lediglich der Trägerkörper 2 aus vergleichsweise günstigem Material bei der Wiederherstellung ausgetauscht werden. Auf diese Art und Weise lassen sich praktischerweise vier und mehr Nachschleifzyklen durchführen.

Im vorliegenden Beispiel hat das Schneideelement mit einer nachgeschliffenen Form und Größe eine Höhe h im Bereich von mehr als 1 mm, insbesondere von mehr als 1,5 mm mm oder 1,7 mm, hat. Besonders vorteilhaft ist es, wenn das Schneideelement 3 mit einer nachgeschliffenen Form und Größe eine Höhe h im Bereich von 1,5 mm bis 3 mm, insbesondere im Bereich von 2,2 mm bis 2,8 mm hat.

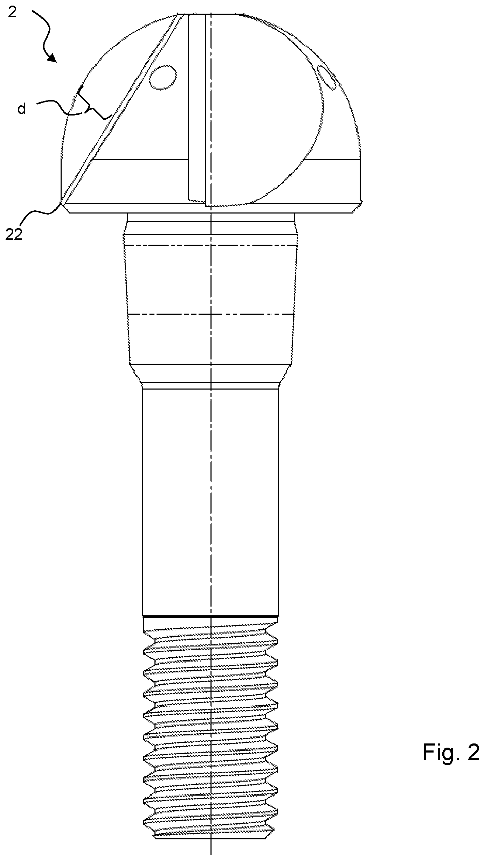

In **Fig. 2** ist eine seitliche Draufsicht auf den Trägerkörper 2 für den Kugelbahnfräser aus Fig. 1 dargestellt.

Der Trägerkörper 2 hat eine Sitzfläche 22, die eben ausgebildet ist und ist unter einem Winkel im Bereich von 20° bis 50°, insbesondere 30° bis 40° gegenüber der Drehachse des Kugelbahnfräsers angeordnet.

Die Sitzfläche 22 hat einen maximalen Abstand d zur kugelsegmentförmigen Außenfläche des Trägerkörpers 2 im Bereich von mehr als 1 mm, bevorzugt von mehr als 1,5 mm oder 1,7 mm. Vorteilhafterweise kann der maximale Abstand d zu einer Außenfläche des Trägerkörpers 2 im Bereich von 1,5 mm bis 3 mm, insbesondere im Bereich von 2,2 mm bis 2,8 mm gewählt werden.

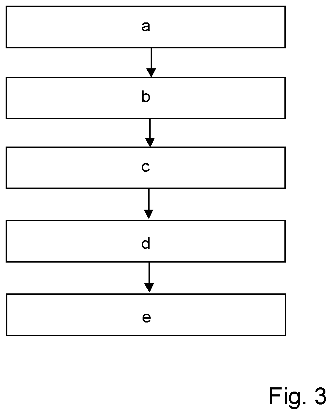

In **Fig. 3** ist ein Blockdiagramm zur Erläuterung des Ablaufs eines Verfahrens zum Wiederherstellen eines Kugelbahnfräsers, wie er zum Beispiel hier beschrieben ist, gezeigt.

Das Verfahren umfasst die folgenden Schritte:
a) Bereitstellen eines Kugelbahnfräser (nach der Verwendung als Werkzeug) mit einem Trägerkörper und mindestens einem daran angeordneten Schneideelement;
b) Trennen des mindestens einen Schneideelements vom Trägerkörper (zum Beispiel durch Löten);
c) Schleifen des Schneideelements (wobei am Außenrand Material derart abgeschliffen wird, so dass sich die Größe und Geometrie des Schneideelements ändert);
d) Bereitstellen eines neuen Trägerkörpers (der eine zum ursprünglichen Trägerkörper angepasste Geometrie und Größe hat, wobei die angepasste Geometrie derart gewählt ist, um die Aufnahme des nachgeschliffenen Schneideelements zu ermöglichen, zum Beispiel durch Verkleinerung des Abstands d); und
e) Befestigen des nachgeschliffenen Schneideelements am neuen Trägerkörper.

Dabei wird im Schritt d) Bereitstellen eines neuen Trägerkörpers ein neuer Trägerkörper bereitgestellt, der eine im Vergleich zum Trägerkörper verschiedene Geometrie hat. Dazu kann zum Beispiel ein Satz an Trägerkörpern eingesetzt werden.

Vorteilhafterweise umfasst der neue Trägerkörper eine Ausnehmung mit einer Sitzfläche, an der das nachgeschliffene Schneideelement mit einer der Schneide gegenüberliegenden Anlagefläche zur Anlage gelangt.

Die Sitzfläche hat einen geringeren maximalen Abstand d zu einer Außenfläche des Trägerkörpers im Vergleich zu dem Trägerkörper aus Schritt b).

Die bereitgestellte Sitzfläche ist gerade ausgebildet und vorteilhafterweise einen maximalen Abstand d zur kugelabschnittsförmigen Außenfläche des neuen Trägerkörpers im Bereich von mehr als 1 mm oder bevorzugt von mehr als 1,5 mm oder 1,7 mm.

Der maximale Abstand d zu einer Außenfläche des Trägerkörpers ist im Bereich von 1,5 mm bis 3 mm (bevorzugt im Bereich von 2,2 mm bis 2,8 mm).

Das bereitgestellte Schneideelement mit einer nachgeschliffenen Schneide hat nach dem Schritt c) eine Höhe h im Bereich von 1,5 mm bis 3 mm, insbesondere im Bereich von 2,2 mm bis 2,8 mm.

## Patentansprüche

1. Verfahren zum Wiederherstellen eines Kugelbahnfräsers (1), umfassend die folgenden Schritte:
a) Bereitstellen eines Kugelbahnfräser (1) mit einem Trägerkörper (2) und mindestens einem daran angeordneten Schneideelement (3);
b) Trennen des mindestens einen Schneideelements (3) vom Trägerkörper (2);
c) Schleifen des Schneideelements (3);
d) Bereitstellen eines neuen Trägerkörpers (2); und
e) Befestigen des nachgeschliffenen Schneideelements am neuen Trägerkörper, I. 1
**dadurch gekennzeichnet, dass**
im Schritt d) Bereitstellen eines neuen Trägerkörpers (2) ein neuer Trägerkörper (2) bereitgestellt wird, der eine im Vergleich zum Trägerkörper verschiedene Geometrie hat.

2. Verfahren nach Anspruch 1, wobei der neue Trägerkörper (2) eine Ausnehmung (21) mit einer Sitzfläche (22) umfasst, an der das nachgeschliffene Schneideelement (3) mit einer der Schneide (31) gegenüberliegenden Anlagefläche (32) zur Anlage gelangt, wobei die Sitzfläche (22) einen geringeren maximalen Abstand d zu einer Außenfläche des Trägerkörpers (2) im Vergleich zu dem Trägerkörper (2) aus Schritt b) hat.

3. Verfahren nach Anspruch 2, wobei die Sitzfläche (22) gerade ausgebildet ist und einen maximalen Abstand d zu einer Außenfläche des neuen Trägerkörpers (2) im Bereich von mehr als 1 mm, insbesondere von mehr als 1,5 mm oder 1,7 mm, hat.

4. Verfahren nach Anspruch 3, wobei der maximale Abstand d zu einer Außenfläche des Trägerkörpers (2) im Bereich von 1,5 mm bis 3 mm, insbesondere im Bereich von 2,2 mm bis 2,8 mm, ist.

5. Verfahren nach einem der Ansprüche 1 bis 4, wobei das Schneideelement (3) mit einer nachgeschliffenen Schneide (31) nach dem Schritt c) eine Höhe h im Bereich von 1,5 mm bis 3 mm, insbesondere im Bereich von 2,2 mm bis 2,8 mm, hat.

## Claims

1. Method of restoring a ball track milling cutter (1) comprising the steps of:
a) providing a ball track milling cutter (1) having a carrier body (2) and at least one cutting element (3) disposed thereon;
b) separating the at least one cutting element (3) from the carrier body (2);
c) grinding the cutting element (3);
d) providing a new carrier body (2); and
e) attaching the reground cutting element to the new carrier body,
**characterized in that**
in step d) of providing a new carrier body (2), a new carrier body (2) is provided which has a different geometry compared to the carrier body.

2. Method according to claim 1, wherein the new carrier body (2) has a recess (21) with a seating surface (22) against which the reground cutting element (3) comes to rest with a contact surface (32) opposite the cutting edge (31), wherein the seating surface (22) has a smaller maximum distance d from an outer surface of the carrier body (2) compared to the carrier body (2) from step b).

3. Method according to claim 2, wherein the seating surface (22) is formed in a straight shape and has a maximum distance d from an outer surface of the new carrier body (2) in the range of more than 1 mm, in particular more than 1.5 mm or 1.7 mm.

4. Method according to claim 3, wherein the maximum distance d to an outer surface of the carrier body (2) is in the range of 1.5 mm to 3 mm, in particular in the range of 2.2 mm to 2.8 mm.

5. Method according to any one of claims 1 to 4, wherein the cutting element (3) with a reground cutting edge (31) after step c) has a height h in the range from 1.5 mm to 3 mm, in particular in the range from 2.2 mm to 2.8 mm.

## Revendications

1. Méthode de réfection d'une fraiseuse pour pistes à billes (1) comprenant les étapes suivantes
a) fournir une fraiseuse pour pistes à billes (1) ayant un corps de support (2) et au moins un élément de coupe (3) disposé sur celui-ci ;
b) séparer l'au moins un élément de coupe (3) du corps de support (2) ;
c) affûter l'élément de coupe (3) ;
d) fournir un nouveau corps de support (2) ; et
e) fixer l'élément de coupe réaffûté au nouveau corps de support,
**caractérisé par le fait que**
à l'étape d) de la fourniture d'un nouveau corps de support (2), un nouveau corps de support (2) est fourni dont la géométrie est différente de celle du corps de support.

2. Procédé selon la revendication 1, dans lequel le nouveau corps de support (2) présente une cavité (21) avec une surface d'appui (22) contre laquelle l'élément de coupe (3) réaffûté vient s'appuyer avec une surface de contact (32) opposée à l'arête de coupe (31), dans lequel la surface d'appui (22) présente une distance maximale d plus petite par rapport à une surface extérieure du corps de support (2) que le corps de support (2) de l'étape b).

3. Procédé selon la revendication 2, dans lequel la surface d'appui (22) est de forme droite et présente une distance maximale d par rapport à la surface extérieure du nouveau corps de support (2) supérieure à 1 mm, en particulier supérieure à 1,5 mm ou 1,7 mm.

4. Procédé selon la revendication 3, dans lequel la distance maximale d par rapport à la surface extérieure du corps de support (2) est comprise entre 1,5 mm et 3 mm, en particulier entre 2,2 mm et 2,8 mm.

5. Procédé selon l'une quelconque des revendications 1 à 4, dans lequel l'élément de coupe (3) avec une arête de coupe (31) réaffûtée après l'étape c) présnte une hauteur h comprise entre 1,5 mm et 3 mm, en particulier entre 2,2 mm et 2,8 mm.
